Europäisches Patentamt

European Patent Office

Office européen des brevets

(11) Publication number: **0 224 691 B1**

# EUROPEAN PATENT SPECIFICATION

(45) Date of publication of patent specification: **10.02.93**    (51) Int. Cl.⁵: **G06F 13/16**, G06F 12/06

(21) Application number: **86114207.3**

(22) Date of filing: **14.10.86**

(54) **A multiple read/write access memory system.**

(30) Priority: **20.12.85 US 811624**
**02.12.85 US 804206**

(43) Date of publication of application:
**10.06.87 Bulletin 87/24**

(45) Publication of the grant of the patent:
**10.02.93 Bulletin 93/06**

(84) Designated Contracting States:
**DE FR GB IT**

(56) References cited:
**EP-A- 0 125 855**
**US-A- 3 737 866**
**US-A- 4 456 965**

**IBM TECHNICAL DISCLOSURE BULLETIN, vol.
23, no. 8, January 1981, pages 3910-3911,
New York, US; W.C. BRANTLEY et al.:
"Double-port register chip using single-port
cells"**

(73) Proprietor: **International Business Machines
Corporation
Old Orchard Road
Armonk, N.Y. 10504(US)**

(72) Inventor: **Auerbach, Daniel Jonathan
926 Michigan Avenue
San Jose California 95125(US)**
Inventor: **Paul, Wolfgang Jakob
483 Los Pinos Way
San Jose California 95123(US)**
Inventor: **Chen, Tien Chi
6566 Tam O'Shanter Drive
San Jose California 95120(US)**

(74) Representative: **Killgren, Neil Arthur
IBM United Kingdom Limited Intellectual
Property Department Hursley Park
Winchester Hampshire SO21 2JN(GB)**

## Description

The present invention relates to memory systems that read and write data to and from several addresses within a given instruction cycle.

In a computer for high-performance computation, the memory has to provide for reading and writing data to the memory at a bandwidth which matches the bandwidth of processing. One approach for matching the processing bandwidth in the prior art has been the use of the cache concept, that is using a fast memory to contain a working set of data so that the processor has quick access to currently active data.

In large scale scientific computations, especially those using pipeline techniques (see for example the review by T. C. Chen in Chapter 9 of Introduction to Computer Architecture, second edition, H. Stone, Editor, Science Research Associates, Chicago, 1980), even the fast cache is taxed to the limit. Take the case, for instance, of handling a three-address floating point code:

A op B = C,

where A and B are addresses for operands and C is the address at which the result of the operation "op" on the operands A and B is to be stored. If the operation is done in a pipeline fashion, using n stages, then as the computation reaches a steady state, at every machine cycle, two operands enter the computation pipe while a third operand carrying the result of the operation started n cycles earlier is stored. The total demand is three memory operations per cycle.

As the performance of the processor increases to shorter and shorter cycle times, the time required for the three memory operations becomes a bottleneck for creating faster and faster processors.

Traditional pipeline "vector" designs use very high-speed memories and/or require strong constraints on memory size and freedom of addressing. The CRAY 1, for example, uses 8 vector registers, each of 64 words, for a total of 512 floating point words, and every vector is used from the beginning and runs consecutively. Thus the CRAY 1 is constrained to a relatively small memory and a rigid addressing scheme.

One prior art approach to reducing the amount of time required for three memory operations per cycle uses the replicated memory approach. If a single conventional memory bank is used for the three address computation, the memory bank would have to perform two fetches and one store for a total of three units gainful work per cycle. As exemplified in US 3 737 866, the replicated memory approach supplies two identical memory units, and stores everything in duplicate, one copy in each bank, to alleviate the fetch bandwidth. By storing everything in duplicate, the fetch bandwidth is alleviated by fetching one operand from each bank in parallel and storing the result back to both units in parallel. Each bank in such a system performs two units of work, one fetch and one store in each cycle, rather than three. Thus the replicated memory approach of the prior art appears to be 1.5 times as fast as the single bank memory. So the replicated memory approach of the prior art requires that an instruction cycle squeeze two memory access cycles in, rather than three of the single bank memory.

Both the single bank memory and the replicated memory approach of the prior art are limited in performance because of the possibility of conflict of accesses to the memory between a read operation and a write operation. Thus the read operation must be done at a time apart from the write operation.

To approach a multiple port memory device that overcomes the possibility of conflicts between read and write accesses to the memory and thereby enhances the performance of the memory device, the present invention provides a memory system to accommodate r read accesses and w write accesses in a memory cycle and comprising:

r groups of w + 1 independently addressable storage units, each storage unit being addressable by the same spectrum of addresses, the memory system having associated with each group:

a pointer memory indicating not more than one storage unit in the group for each address of the spectrum of addresses, and having a cycle time which is less than or equal to $t/(w+1)$ where t is the cycle time of the memory system;

w + 1 address inputs,

a data output,

w data inputs,

means to supply a different one of the read addresses to each group together with all the write addresses,

means to supply the read address connected to a group to that storage unit of the group indicated by the pointer for that address and to write each data input to a different one of the other w storage units,

means to connect the read storage unit to the data output and

means to update the pointer memory entries for all said write addresses.

The pointer means directs memory accessing to prevent conflicts. Conflicts are always avoided, absent external errors such as two identical addresses in a single presented instruction, which is not expected in this context, because one unit in each of the r groups is directed to supply data in response to a read address and the w remaining units are available for writing data in response to the w write addresses redundantly so that each of the groups of memory units will have valid data in at least one of its $w+1$ memory units for a given address.

In terms of the currently most common multiple access instruction requiring two reads and one write, the present invention provides a memory system to accommodate two read accesses and one write access in a memory cycle the system comprising two groups of two independently addressable storage units, each group having an associated pointer memory.

The present invention will be described further by way of example with reference to an indication of the general structure and a detailed description of a two read, one write embodiment of the invention, the latter being illustrated in the accompanying drawings in which:

FIGS. 1A, 1B and 1C are charts used to illustrate the principle of operation of the present invention;

FIG. 2, in sections A, B, C and D, is a diagram of the two read, one write embodiment of the present invention referred to; and

FIG. 3 is a timing chart illustrating the operation of the system of FIG. 2 while performing the example described with reference to FIGS. 1A through 1C.

In general terms, a pipelined multiport RAM (random access memory), has M locations for storage of data items of width d, and which is capable of performing within one cycle r read operations and in write operations, and which has a cycle time t.

Data items are stored in r groups of units of conventional RAM, which have a cycle time t. Each group has $w+1$ units, called unit 0,..., unit w of that group. Each unit has M locations for storage of data items of width d.

Each group also has a pointer RAM having a cycle time equal to or less than $t/(w+1)$. The pointer RAM has M locations for storage of data items of width of at least $(\log_2(w+1))$, so that in one location of the pointer RAM of a group of units one can store a pointer to a particular unit of that group.

The following property is established initially and is maintained during operation of the multiport RAM:

If data item I is stored in location 1 of the multiport RAM, then in each group g there is a unit $b(g,1)$ such that a valid copy of data item I is stored at location 1 of unit $b(g,1)$. The pointer to unit $b(g,1)$ is stored at location 1 of the pointer RAM of group g.

An operation of the multiport RAM with read addresses $a(0)$, ...,$a(r-1)$ and write addresses $c(0)$,....,$c(w-1)$ is executed in the following way:

For each group g the value $b(g,a(g))$ is fetched from location $a(g)$ of the unit b indicated by the pointer in the pointer RAM of group g. This takes time $t/(w+1)$. Concurrently write conflicts (equality of two of the write addresses) can be discovered, potentially an external error;

For each group g the content of location $a(g)$ of unit $b(g,a(g))$ of group g is fetched. This takes time equal to or less than t and keeps one unit of each group busy reading;

For each group g each of the w units b in g which is not busy reading performs one of the w write operations. One way to do this is to perform in unit b the write operation to location $c(b)$ if b is less than $b(g, a(g))$ and to perform in unit b the write operation to location $c(b-1)$ if b is greater than $b(g, a(g))$. In this case within each group each write address $c(i)$ has to be routed only to two memory units, namely to units i and $i+1$;

For each group g the index b of the unit in group g which performs the write operation to location $c(b)$ is stored in location $c(b)$ of the pointer RAM of group g. This is done sequentially for each write address and takes no more than time $wt/(w+1)$. If after this the next addresses $a(1),...,a(r-1)$, $c(1),...,c(w-1)$ are already available, then the lookup of the next indices $b(g,a(g))$ can already be started and overlapped with the last $1/(w+1)$'th of the cycle time of the units while the units finish the previous operation.

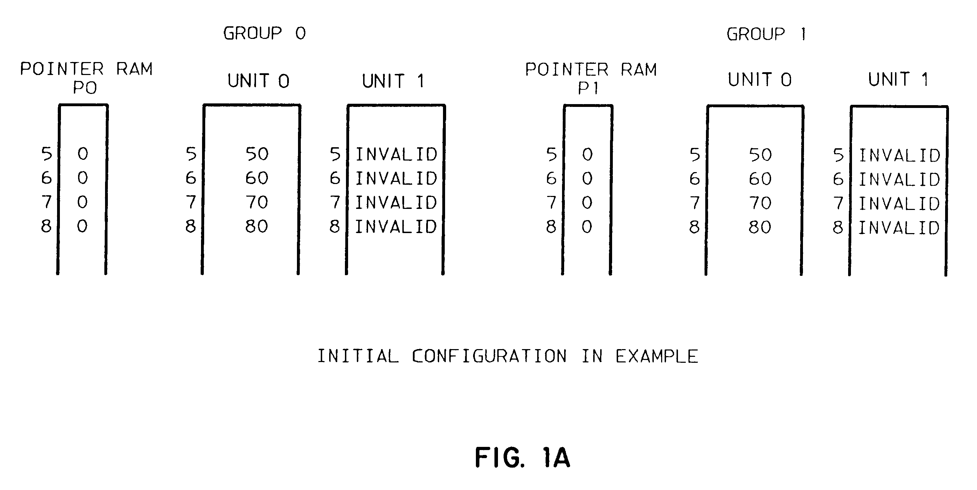

FIGS. 1A through 1C illustrate an example of the operation of such a memory system, where $r=2$ and $w=1$. Thus there are 2 groups of units, say group 0 and group 1. Each group has 2 units, called unit 0 and unit 1. The pointer RAM for group 0 is called P0 and the pointer RAM for group 1 is called P1.

Assume, as shown in FIG. 1A, that the initial contents of locations 5, 6, 7 and 8 of the multiport RAM are the values 50, 60, 70 and 80. Further assume that initially locations 5, 6, 7, 8 of unit 0 of each group have valid data, and that this is reflected by value 0 at locations 5, 6, 7, 8 of the two pointer RAMs P0, P1.

Now assume a first operation is performed with addresses $a(0) = 5$, $a(1) = 6$ and $c(0) = 7$. Further assume that in this operation value 100 is written to location 7.

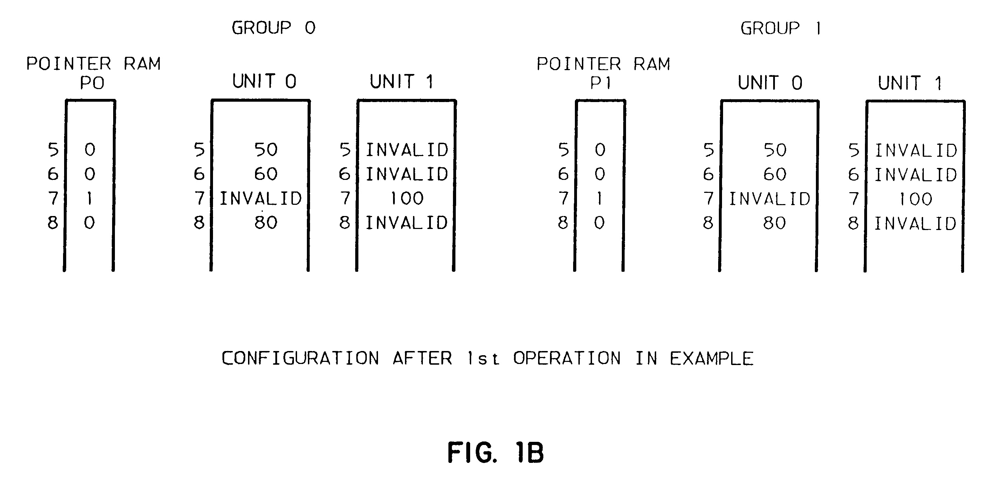

Then the index $b(0,5)$ of the unit in group 0 which has valid data in location 5 is fetched by a read from location 5 in pointer RAM P0. Similarly, the index $b(1,6)$ of the unit in group 1 which has valid data in location 6 is fetched by a read from location 6 in pointer RAM P1. Because b(0,5) = 0 the read data from address a(0) = 5 are fetched from unit 0 of group 0. Because unit 0 of group 0 is busy reading, the value 100 is written to address 7 of unit 1 of group 0. Bank 1 of group 0 now has valid data at location 7. This is reflected by writing value 1 to location 7 of pointer RAM P0 (See, FIG. 1B).

Similarly, because b(1,6) = 0 the read data from address a(1) = 6 are fetched from unit 0 of group 1. Because unit 0 of group 1 is busy reading, the value 100 is also written to address 7 of unit 1 of group 1. Bank 1 of group 1 now has valid data at location 7. This is reflected by writing value 1 to location 7 of pointer RAM P1. The resulting situation is shown in FIG. 1B.

Now suppose another operation is performed with read addresses a(0) = 7, a(2) = 8 and write address c(0) = 5. Further assume that in this operation value 200 is written to location 5.

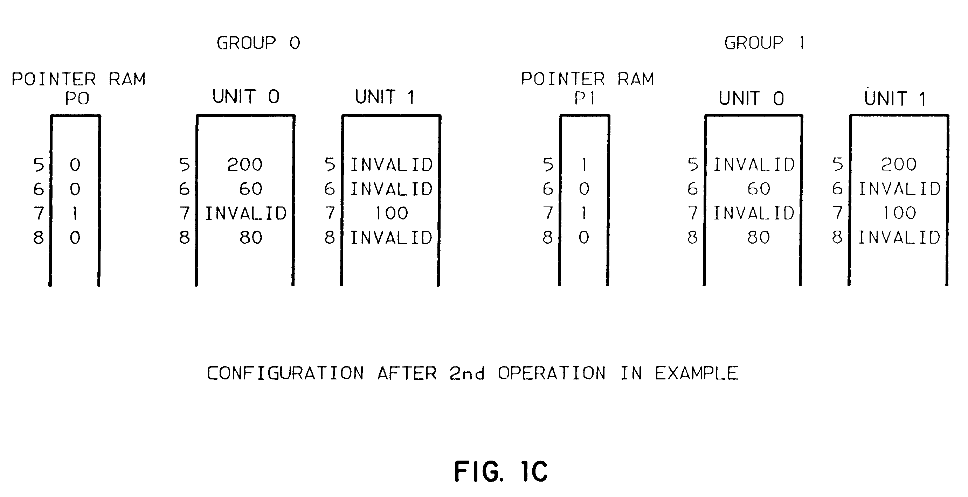

Then the index b(0,7) of the unit in group 0 which has valid data in location 7 is fetched by a read from location 7 in pointer RAM P0. Similarly, the index b(1,8) of the unit in group 1 which has valid data in location 8 is fetched by a read from location 8 in pointer RAM P1. Because b(0,7) = 1 the read data from address a(0) = 7 are fetched from unit 1 of group 0. Because unit 1 of group 0 is busy reading, value 200 is written to address 5 of unit 0 of group 0. Bank 0 of group 0 now has valid data at location 5. This is reflected by writing value 0 to location 5 of pointer RAM P0 (See, FIG. 1C).

Because b(1,8) = 0 the read data from address a(1) = 8 are fetched from unit 0 of group 1. Because unit 0 of group 1 is busy reading, value 200 is also written to address 5 of unit 1 of group 1. Bank 1 of group 1 now has valid data at location 5. This is reflected by writing value 1 to location 5 of pointer RAM P1. The new situation is shown in FIG. 1C.

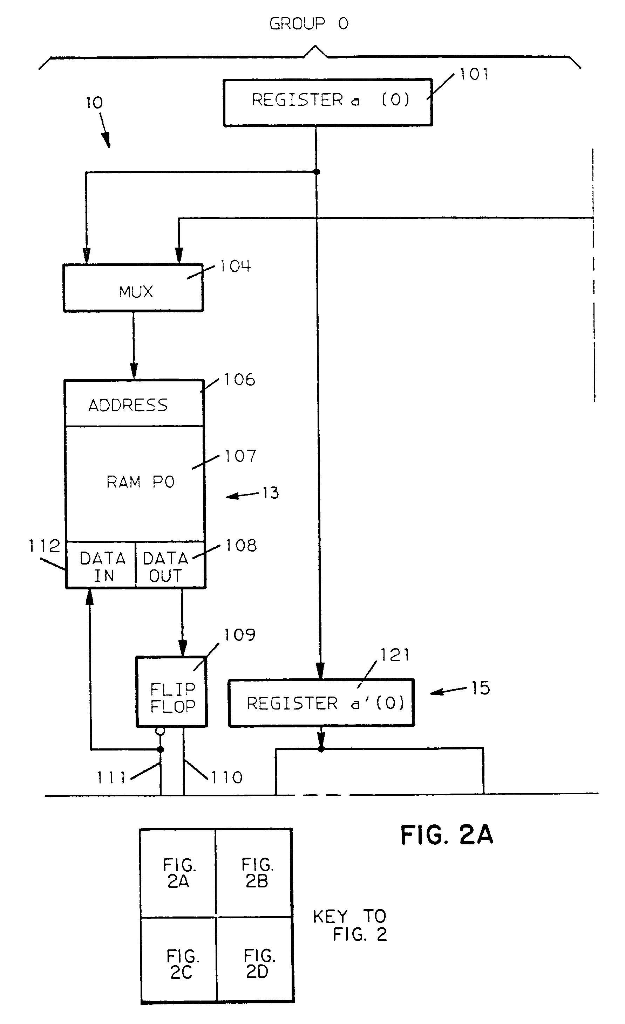

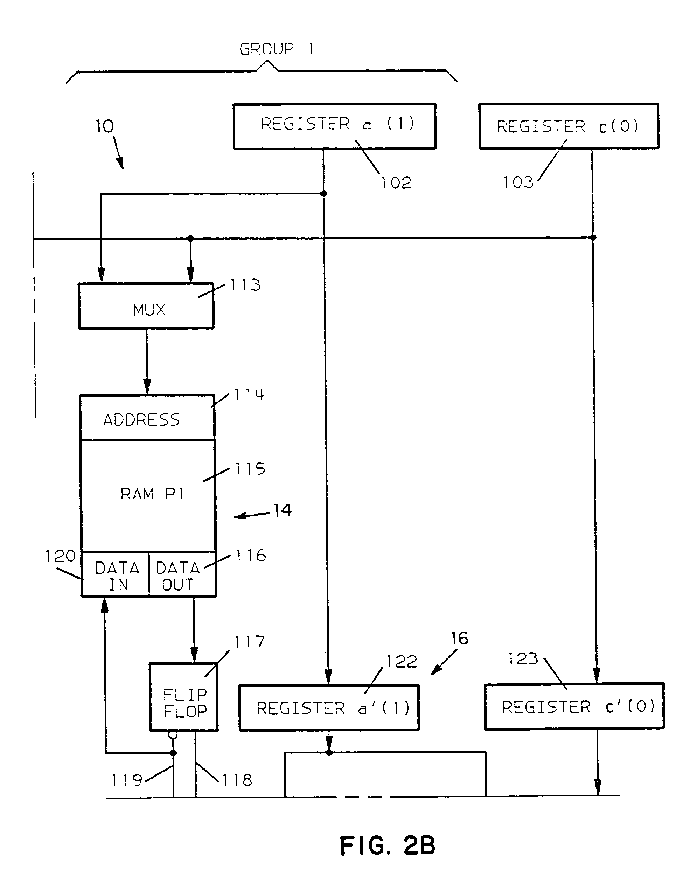

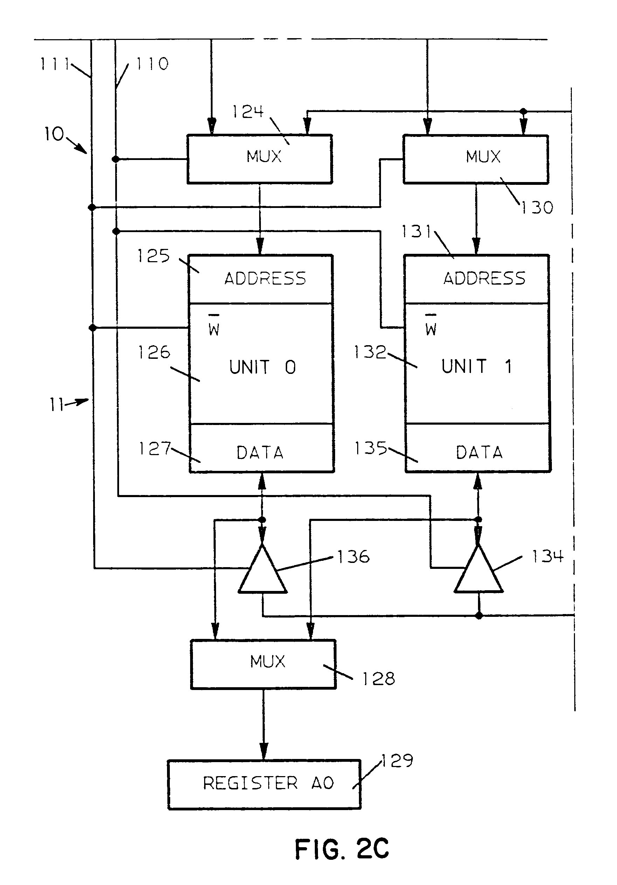

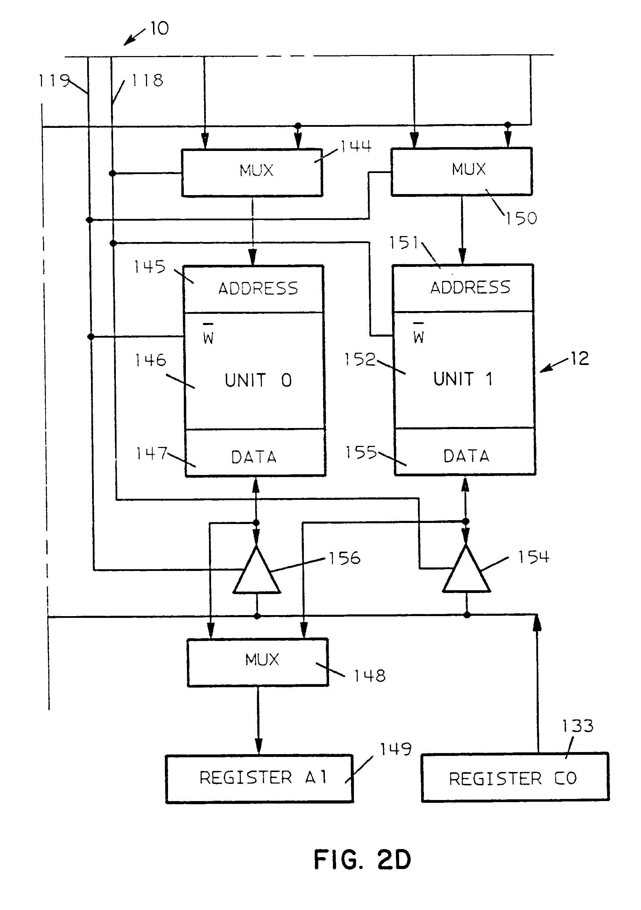

As shown in FIG. 2, the memory system is responsive to a first address a(0), a second address a(1) and a third address c(0) within an instruction cycle to supply data read from the first and second addresses and for writing data received to the third address. The first, second and third addresses are supplied to address registers 101, 102 and 103 respectively. The data read from the first and second addresses is supplied at output registers 129 and 149 respectively. The data received for writing to the third address is received in register 133.

The system 10 includes a first group 11, labelled group 0 of two memory units 126,132, labelled unit 0 and unit 1, respectively. The first group 11 is responsive to the first address a(0) from register 101 which is moved through register 121 and multiplexers 124 and 130 to one of the two units 126, 132. Also the first group 11 is responsive to the third address c(0) which is moved through register 123 and through the multiplexers 124 and 130 to the other of the two units, 126, 132. Data from the first address a(0) is supplied from one unit of the two units 126, 132 at the respective data output ports 127, 135. Through multiplexer 128 the data is then supplied to the output register 129. The data received at the input register 133, is supplied through the drivers 136 or 134 to the data ports 127, 135 of the two units 126,132, only one of which is enabled for a write. The third address c(0) is supplied to that one unit which is enabled for a write and the data is written. Thus data is read from one of the two units while data is written to the other of the two units during a given memory access cycle.

The system further comprises a second group 12, labelled group 1, of two memory units 146, 152 designated unit 0 and unit 1 respectively. The second group 12 of two memory units 146, 152 is configured in the same manner as the first group 11, group 0. However, the second address a(1) which is moved through register 122 is supplied to multiplexers 144, 150 in conjunction with the third address c(0) from the register 123. The second group supplies data read from one of the two units through the data port 147, 155 and the multiplexer 148 to the output register 149. The other unit writes data received from register 133 through the drivers 156 or 154 at the third address c(0).

Associated with the system 10 is a pointer means for controlling the first group 11 and the second group 12 so that the one of the two units containing valid data is read in response to the read address a(0) or a(1) and that data received through register 133 is written to the other unit.

The pointer means includes means 13, 14 for storing pointers to the units containing valid data at the first and second addresses in the first and second groups, respectively. The means 13 is responsive to the first address a(0) from register 101 through multiplexer 104 to provide a pointer at a data output register 108. The pointer is stored in the RAM 107 and accessed through address port 106. Also the means 13 is responsive to the third address c(0) in register 103 through multiplexer 104 for writing data received at the data input port 112 to the RAM 107 at the address in the port 106. The means 14 associated with the second group 12 includes a similar system except that it is responsive to the second address a(1) from register 102 rather than the first address.

Further included in the pointer means for the first group 11 is a first means 15 for supplying the first address a(0) to the one unit in the first group containing valid data and for supplying the third address to the other unit. The first means 15 includes flip-flop 109 which latches the pointer supplied at the data output

4

EP 0 224 691 B1

port 108 of the pointer RAMs 107 corresponding to the first address a(0). The pointer is maintained in the flip-flop 109 which provides a true output 110 and a complement output 111. The true output 110 and complement output 111 are provided to the first group so that the multiplexers 124 and 130 supply the first address to the one unit having valid data while the other unit is enabled for a write operation. Also, the complement output 111 is supplied at the data input port 112 of the pointer RAM 107 so that a pointer indicating that valid data at the third address c(0) is stored in the other unit is written to the pointer RAM 107.

The second group also includes a second means 16 for supplying the second address a(1) to the one unit in the second group 12 containing valid data and the third address to the other unit in the second group 12. It is configured in the same manner as described above for the first group.

Read addresses a(0) and a(1) are loaded into registers 101 and 102. The write address c(0) is loaded into register 103.

The pointer value b(0,a(0)) is fetched by routing address a(0) from register 101 via multiplexer 104 to address port 106 of the pointer RAM 107 of unit 0. RAM 107 performs a read and the result is loaded from data output port 108 of pointer RAM 107 into flip-flop 109. The non-inverting output 110 of flip-flop 109 gives the index of the unit of group 0 that will perform the read operation. The inverting output 111 of flip-flop 109 gives the index of the unit of group 0 that will perform the write operation and the new value of b-(0,c(0)) which is routed to the data input port 112 of RAM 107.

After pointer b(0, a(0)) has been fetched, the new pointer value b(0,c(0)) is stored into RAM 107 by routing address c(0) from register 103 via MUX 104 to address port 106 of the pointer RAM 107 of unit 0 and having pointer RAM 107 perform a read operation.

Similarly, the pointer value b(1,a(1)) is fetched by routing address a(1) from register 102 via multiplexer 113 to address port 114 of the pointer RAM 115 of unit 1. RAM 115 performs a read and the result is loaded from data output port 116 of pointer RAM 115 into flip-flop 117. The non-inverting output 118 of flip-flop 117 gives the index of the unit of group 1, which will perform the read operation. The inverting output 119 of flip-flop 117 gives the index of the unit of group 1 that will perform the write operation and the new value of b(1,c(0)) which is routed to the data input port 120 of RAM 115.

After pointer b(1, a(1)) has been fetched, the new pointer value b(1,c(0)) is stored into RAM 115 by routing address c(0) from register 103 via MUX 113 to address port 114 of the pointer RAM 115 of unit 1 and having pointer RAM 115 perform a read operation.

At the time when the pointer values b(0,a(0)) and b(1,a(1)) are loaded in into flip-flops 108 and 117, the value of address a(0) is pipelined from register 101 into register 121, and the value of address a(1) is pipelined from register 102 into register 122, and the value of address c(0) is pipelined from register 103 into register 123.

In case b(0,a(0)) = 0 the pipelined read address a'(0) in register 121 is routed via MUX 124 to address port 125 of memory unit 126 which is unit 0 of group 0. Memory unit 126 performs a read operation. The result is routed from the data port 127 of memory unit 126 via MUX 128 to the data output register 129 of group 0. Also in case b(0,a(0)) = 0 the pipelined write address c'(0) in register 123 is routed via MUX 130 to address port 131 of memory unit 132, which is unit 1 of group 0. The data to be written into the multiport RAM is routed from data input register 133 via driver 134 to the data port 135 of memory unit 132. Memory unit 132 performs a write operation.

In case b(0,a(0)) = 1 the pipelined read address a'(0) in register 121 is routed via MUX 130 to address port 131 of memory unit 132. Memory unit 132 performs a read operation. The result is routed from the data port 135 of memory unit 132 via MUX 128 to the data output register 129 of group 0. Also in case b-(0,a(0)) = 1 the pipelined write address c'(0) in register 123 is routed via MUX 124 to address port 125 of memory unit 126. The data to be written into the multiport RAM is routed from data input register 133 via driver 136 to the data port 127 of memory unit 126. Memory unit 126 performs a write operation.

The select lines of multiplexers 124, 130 and 128, the (active low) write signals of memory units 126 and 132 as well as the (active low) output enable signals of drivers 134 and 136 are directly controlled by the non-inverted output 110 and the inverted output 111 of flip-flop 109.

Similarly, in case b(1,a(1)) = 0 the pipelined read address a'(1) in register 122 is routed via MUX 144 to address port 145 of memory unit 146 which is unit 0 of group 1. Memory unit 146 performs a read operation. The result is routed from the data port 147 of memory unit 146 via MUX 148 to the data output register 149 of group 1. Also in case b(1,a(1)) = 0 the pipelined write address c'(0) in register 123 is routed via MUX 150 to address port 151 of memory unit 152, which is unit 1 of group 1. The data to be written into the multiport RAM is routed from data input register 133 via driver 154 to the data port 155 of memory unit 152. Memory unit 152 performs a write operation.

In case b(1,a(1)) = 1 the pipelined read address a'(1) in register 122 is routed via MUX 150 to address

5

port 151 of memory unit 152. Memory unit 152 performs a read operation. The result is routed from the data port 155 of memory unit 152 via MUX 148 to the data output register 149 of group 0. Also in case b-(1,a(1)) = 1 the pipelined write address c'(0) in register 123 is routed via MUX 144 to address port 145 of memory unit 146. The data to be written into the multiport RAM is routed from data input register 133 via driver 156 to the data port 147 of memory unit 146. Memory unit 146 performs a write operation.

The select lines of multiplexers 144, 150 and 148, the (active low) write signals of memory units 146 and 152 as well as the (active low) output enable signals of drivers 154 and 156 are directly controlled by the non-inverted output 118 and the inverted output 119 of flip-flop 117.

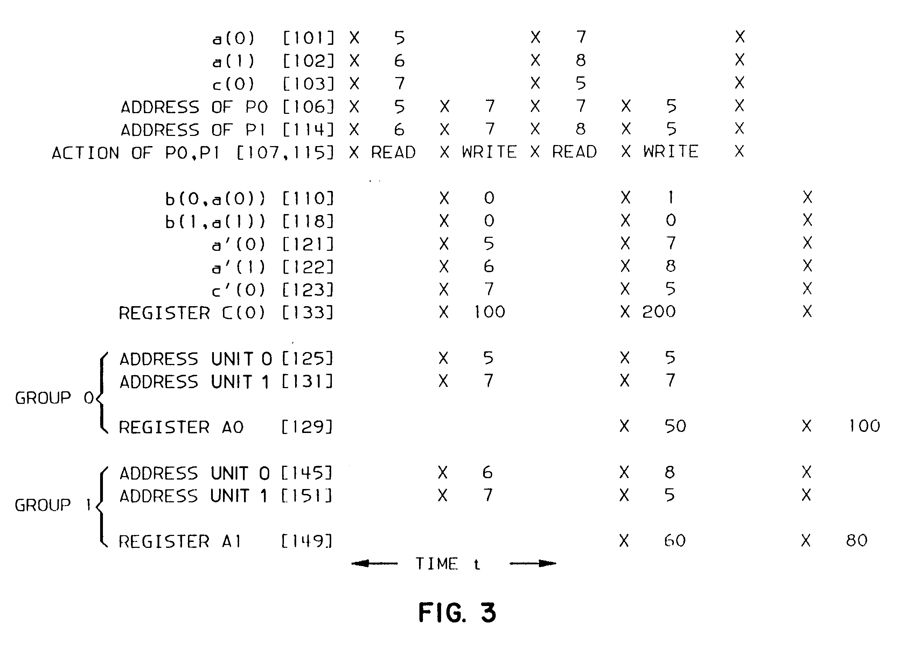

FIG. 3 shows a self explanatory timing diagram for the system of FIGS. 2A, 2B, 2C and 2D when the operations illustrated in FIGS. 1A, 1B and 1C are executed.

Table 1 gives a list of widely available components which can be used to build the system of FIG. 2. Using these components a 3-port RAM with 2K memory locations, a cycle time of about 100 ns and capable of performing 2 reads and 1 write in 1 cycle can be built. This matches the 100 ns cycle time of the fastest floating point ALU and multiplier chips presently available.

TABLE 1

| | | |
|---|---|---|
| REGISTERS | 101, 102, 103, 121, 122, 123, 129, 149, 133 | F374 |
| MULTIPLEXERS | 104, 113, 124, 130, 144, 150, 128, 148 | F157 |
| DRIVERS | 136, 134, 156, 154 | F244 |
| POINTER RAM | 107, 115 | Am93425A |
| BANK RAM | 126, 132, 146, 152 | Am9128-10 |
| FLIP-FLOP | 109,117 | F74 . |

It will be appreciated that the selection made by the setting of flip-flops 109 and 117 will not suffice for the general case. Instead a more general though, of itself conventional "one-out-of-w + 1" will be required and the allotting of the writes to the "rest" can be by any systematic protocol.

It will be clear that there is no internally caused conflict of accesses for performing multiple reads and writes in a given memory access cycle. The pointer RAMs can be made to operate very quickly, and the action of the pointer RAMs can be made to overlap in time with the operation of the memory units. Thereby, the system performs the work of the multiple reads and writes in essentially the cycle time of the memory units providing a significant performance advantage over the prior art.

**Claims**

1. A memory system to accommodate r read accesses and w write accesses in a memory cycle and comprising:

r groups (11,12) of w + 1 independently addressable storage units (126,132; 146,152), each storage unit being addressable by the same spectrum of addresses, the memory system having associated with each group:

a pointer memory (13,14) indicating not more than one storage unit in the group for each address of the spectrum of addresses, and having a cycle time which is less than or equal to t/(w + 1) where t is

EP 0 224 691 B1

the cycle time of the memory system;

w + 1 address inputs (101,103; 102,103),

a data output (129,149),

w data inputs (133),

means (104,121,123; 113,122,123) to supply a different one of the read addresses to each group together with all the write addresses,

means (109,124,130; 117,144,150) to supply the read address connected to a group to that storage unit of the group indicated by the pointer for that address and to write each data input to a different one of the other w storage units,

means (128,148) to connect the read storage unit to the data output and

means (112,120) to update the pointer memory entries for all said write addresses.

2. A memory system as claimed in claim 1 wherein r = 2 and w = 1.

3. A system as claimed in claim 2, wherein the pointer memory includes a pointer storage array (107,115) storing pointers potentially equal in number to the locations of each storage unit indicating the unit last written into at each address, the cycle time of the pointer storage array being at most half that of the storage units, means (104,113) applying firstly the read address and then the write address to the pointer array, a latch (109,117) set/reset by the output of the pointer array for the applied read address selecting the storage unit to be read at that address, the storage unit to be written into at the write address and the nature of the pointer to be entered into the pointer array at the write address.

4. A system as claimed in claim 3, wherein each storage unit has a common data input/output register, the system data input being selectively coupled to the storage unit to be written into by gating means (136, 134, 156, 154) controlled by the state of the latch.

**Patentansprüche**

1. Speichersystem, das in einem Speicherzyklus r Lesezugriffe und w Schreibzugriffe ermöglicht und folgendes aufweist:

r Gruppen (11, 12) von w + 1 unabhängig adressierbaren Speichereinheiten (126, 132; 146, 152), wobei jede Speichereinheit mit demselben Spektrum von Adressen adressierbar ist und das Speichersystem in Verbindung mit jeder Gruppe aufweist:

einen Zeigerspeicher (13, 14), der für jede Adresse des Spektrums von Adressen nicht mehr als eine Speichereinheit in der Gruppe anzeigt und der eine Zykluszeit besitzt, die kleiner oder gleich $t/(w + 1)$ ist, wobei t die Zykluszeit des Speichersystems ist;

w + 1 Adreßeingänge (101, 103; 102, 103),

einen Datenausgang (129, 149),

w Dateneingänge (133)

Mittel (104, 121, 123; 113, 122, 123), um zusammen mit allen Schreibadressen an jede Gruppe eine unterschiedliche Leseadresse zu liefern,

Mittel (109, 124, 130; 117, 144, 150), um die Leseadresse zu liefern, die mit einer Gruppe jener Speichereinheit in der Gruppe verbunden ist, die durch den Zeiger für diese Adresse angezeigt wird, und um jede Dateneingabe an eine andere der w Speichereinheiten zu schreiben,

7

Mittel (128, 148), um den Lesespeicher mit dem Datenausgang zu verbinden, und

Mittel (122, 120), um für alle Schreibadressen die Einträge im Zeigerspeicher zu erneuern.

2. Speichersystem nach Anspruch 1, bei welchem r = 2 und w = 1 ist.

3. System nach Anspruch 2, bei welchem der Zeigerspeicher folgendes enthält: einen Zeigerspeicherbereich (107, 115) zum Speichern von Zeigern, deren Anzahl potentiell gleich den Positionen in jeder Speichereinheit ist und die anzeigen, welche Einheit zuletzt an jede Adresse geschrieben wurde, wobei die Zykluszeit des Zeigerspeicherbereichs maximal die Hälfte jener der Speichereinheiten ist, Mittel (104, 113), die im Zeigerbereich zuerst die Leseadresse und dann die Schreibadresse anwenden, ein Latch (109, 117), das für die angewandten Leseadressen, welche die an dieser Adresse zu lesende Speichereinheit wählen, durch die Ausgabe des Zeigerbereichs gesetzt/rückgesetzt wird, die Speichereinheit, in welche an der Schreibadresse zu schreiben ist und die Art des Zeigers, der in den Zeigerbereich einzugeben und an die Schreibadresse zu schreiben ist.

4. System nach Anspruch 3, bei welchem jede Speichereinheit ein gemeinsames Register zur Datenein/ausgabe besitzt, wobei die Systemdateneingabe selektiv mit der Speichereinheit verbunden ist, um darin mit Tormittlen (136, 134, 156, 154) geschrieben zu werden, die vom Zustand des Latch gesteuert werden.

**Revendications**

1. Système de mémoire pour la prise en charge de r accès de lecture et w accès d'écriture dans un cycle de mémoire, comprenant :
   r groupes (11,12) de w + 1 unités de stockage indépendamment adressables (126,132;146,152), chaque unité de stockage étant adressable par le même spectre d'adresses, le système de mémoire comportant en association avec chaque groupe :
   une mémoire de pointeurs (13,14) indiquant au plus une unité de stockage dans le groupe pour chaque adresse du spectre d'adresses, et ayant un temps de cycle qui est inférieur ou égal à $t/(w + 1)$, t étant le temps de cycle du système de mémoire ;
   w + 1 entrées d'adresse (101,103;102,103) ;
   une sortie de données (129,149) ;
   w entrées de données (133) ;
   des moyens (104,121,123;113,122,123) pour fournir une adresse différente, parmi les adresses de lecture, à chaque groupe en même temps que toutes les adresses d'écriture ;
   des moyens (109,124,130;117,144,150) pour fournir l'adresse de lecture, associée à un groupe, à l'unité de stockage du groupe indiquée par le pointeur pour cette adresse, et pour écrire chaque entrée de données dans une unité différente parmi les w autres unités de stockage ;
   des moyens (128,148) pour connecter l'unité de stockage de lecture à la sortie de données ; et
   des moyens (112,120) pour mettre à jour les entrées de la mémoire depointeurs pour toutes lesdites adresses d'écriture.

2. Système de mémoire suivant la revendication 1, dans lequel r = 2 et w = 1.

3. Système suivant la revendication 2, dans lequel la mémoire de pointeurs comprend un ensemble de stockage de pointeurs (107,115) stockant des pointeurs en nombre potentiellement égal à celui des emplacements de chaque unité de stockage et indiquant l'unité écrite en dernier à chaque adresse, le temps de cycle de l'ensemble de stockage de pointeurs étant au plus la moitié de celui des unités de stockage, des moyens (104,113) appliquant d'abord l'adresse de lecture puis l'adresse d'écriture à l'ensemble de stockage de pointeurs, et une bascule (109, 117) positionnée/restaurée par la sortie de l'ensemble de stockage de pointeurs pour l'adresse de lecture appliquée afin de sélectionner l'unité de stockage à lire à cette adresse, l'unité de stockage dans laquelle il faut écrire à l'adresse d'écriture et la nature du pointeur à introduire dans l'ensemble de stockage de pointeurs à l'adresse d'écriture.

4. Système suivant la revendication 3, dans lequel chaque unité de stockage comprend un registre commun d'entrée/sortie de données, l'entrée de données du système étant sélectivement couplée à l'unité de stockage dans laquelle il faut écrire, par des moyens d'aiguillage (136,134,156,154) commandés par l'état de la bascule.

GROUP 0                                                    GROUP 1

POINTER RAM              UNIT 0         UNIT 1         POINTER RAM              UNIT 0         UNIT 1
     P0                                                    P1

  5 │  0              5 │  50       5 │ INVALID       5 │  0              5 │  50       5 │ INVALID
  6 │  0              6 │  60       6 │ INVALID       6 │  0              6 │  60       6 │ INVALID
  7 │  0              7 │  70       7 │ INVALID       7 │  0              7 │  70       7 │ INVALID
  8 │  0              8 │  80       8 │ INVALID       8 │  0              8 │  80       8 │ INVALID


INITIAL  CONFIGURATION  IN  EXAMPLE


**FIG. 1A**

EP 0 224 691 B1

GROUP 0

POINTER RAM
PO

| | |
|---|---|
| 5 | 0 |
| 6 | 0 |
| 7 | 1 |
| 8 | 0 |

UNIT 0

| | |
|---|---|
| 5 | 50 |
| 6 | 60 |
| 7 | INVALID |
| 8 | 80 |

UNIT 1

| | |
|---|---|
| 5 | INVALID |
| 6 | INVALID |
| 7 | 100 |
| 8 | INVALID |

GROUP 1

POINTER RAM
P1

| | |
|---|---|
| 5 | 0 |
| 6 | 0 |
| 7 | 1 |
| 8 | 0 |

UNIT 0

| | |
|---|---|
| 5 | 50 |
| 6 | 60 |
| 7 | INVALID |
| 8 | 80 |

UNIT 1

| | |
|---|---|
| 5 | INVALID |
| 6 | INVALID |
| 7 | 100 |
| 8 | INVALID |

CONFIGURATION AFTER 1st OPERATION IN EXAMPLE

**FIG. 1B**

EP 0 224 691 B1

GROUP 0

GROUP 1

POINTER RAM
P0

UNIT 0

UNIT 1

POINTER RAM
P1

UNIT 0

ÙNIT 1

| | P0 |
|---|---|
| 5 | 0 |
| 6 | 0 |
| 7 | 1 |
| 8 | 0 |

| | UNIT 0 |
|---|---|
| 5 | 200 |
| 6 | 60 |
| 7 | INVALID |
| 8 | 80 |

| | UNIT 1 |
|---|---|
| 5 | INVALID |
| 6 | INVALID |
| 7 | 100 |
| 8 | INVALID |

| | P1 |
|---|---|
| 5 | 1 |
| 6 | 0 |
| 7 | 1 |
| 8 | 0 |

| | UNIT 0 |
|---|---|
| 5 | INVALID |
| 6 | 60 |
| 7 | INVALID |
| 8 | 80 |

| | UNIT 1 |
|---|---|
| 5 | 200 |
| 6 | INVALID |
| 7 | 100 |
| 8 | INVALID |

CONFIGURATION AFTER 2nd OPERATION IN EXAMPLE

FIG. 1C

EP 0 224 691 B1

GROUP 0

REGISTER a (0) — 101

10

MUX — 104

ADDRESS — 106

RAM P0 — 107    ← 13

DATA IN — 112    DATA OUT — 108

FLIP FLOP — 109

REGISTER a'(0) — 121    ← 15

111    110

**FIG. 2A**

| FIG. 2A | FIG. 2B |
|---------|---------|
| FIG. 2C | FIG. 2D |

KEY TO FIG. 2

GROUP 1

10

REGISTER a (1)

102

REGISTER c(0)

103

113

MUX

114

ADDRESS

115

RAM P1

14

120  DATA IN | DATA OUT

116

117

FLIP FLOP

122    16

REGISTER a'(1)

123

REGISTER c'(0)

119    118

FIG. 2B

FIG. 2C

FIG. 2D

```
        a(0)          [101]  X   5                X   7                X
        a(1)          [102]  X   6                X   8                X
        c(0)          [103]  X   7                X   5                X
   ADDRESS OF P0      [106]  X   5   X   7    X   7    X   5    X
   ADDRESS OF P1      [114]  X   6   X   7    X   8    X   5    X
ACTION OF P0,P1  [107,115]  X  READ X  WRITE X  READ X  WRITE  X

     b(0,a(0))        [110]          X   0          X   1          X
     b(1,a(1))        [118]          X   0          X   0          X
        a'(0)         [121]          X   5          X   7          X
        a'(1)         [122]          X   6          X   8          X
        c'(0)         [123]          X   7          X   5          X
   REGISTER C(0)      [133]          X  100         X  200         X

GROUP 0 { ADDRESS UNIT 0 [125]      X   5          X   5
          ADDRESS UNIT 1 [131]      X   7          X   7
          REGISTER A0    [129]                     X   50         X  100

GROUP 1 { ADDRESS UNIT 0 [145]      X   6          X   8          X
          ADDRESS UNIT 1 [151]      X   7          X   5          X
          REGISTER A1    [149]                     X   60         X   80

                  ←—— TIME t ——→
```

**FIG. 3**

EP 0 224 691 B1